# FASCICULE DE BREVET EUROPEEN

(11) **EP 3 329 154 B1**
(45) Date de publication et mention de la délivrance du brevet: **12.02.2020**
(21) Numéro de dépôt: 16744751.5
(22) Date de dépôt: 27.07.2016
(51) Int. Cl.: F16H 61/4017, F16H 61/4078, F16K 17/06, F15B 13/02, F16K 17/04

(54) **DISPOSITIF DE LIMITATION DE PRESSION NOTAMMENT POUR UN SYSTÈME D'ASSISTANCE DE VÉHICULE**
DRUCKBEGRENZUNGSVORRICHTUNG, INSBESONDERE FÜR EIN ASSISTENZSYSTEM FÜR FAHRZEUGE
PRESSURE LIMITING DEVICE, IN PARTICULAR FOR AN ASSIST SYSTEM FOR VEHICLES

(30) Priorité: 28.07.2015 FR 1501623
(43) Date de publication de la demande: 06.06.2018
(73) Titulaire: Poclain Hydraulics Industrie, 60410 Verberie (FR)
(72) Inventeur: BOZIC, Ante, 60410 Verberie (FR)
(74) Mandataire: Regimbeau
(86) Numéro de dépôt international: PCT/EP2016/067945
(87) Numéro de publication internationale: WO 2017/017154

(56) Documents cités:
- FR-A1- 2 996 176
- FR-A5- 2 130 805
- US-A- 4 520 625
- US-B1- 6 499 296

## Description

### DOMAINE TECHNIQUE GENERAL

L'invention concerne la gestion des surpressions des circuits hydrauliques, et plus particulièrement les dispositifs de type « limiteur de pression » ou « soupape de protection ».

L'invention s'applique notamment aux circuits d'assistance hydraulique pour véhicule.

Les assistances hydrauliques sont effectuées à l'aide de machines hydrauliques qui peuvent fournir du couple aux roues motorisées. Ces machines transforment l'énergie hydraulique d'une huile sous pression en une énergie mécanique, ou inversement.

### ETAT DE L'ART

Sur un véhicule, une première machine hydraulique M1 est montée sur l'essieu avant et une deuxième machine hydraulique M2 est montée sur l'essieu arrière. Par machines, on signifie qu'elles peuvent fonctionner en moteur ou en pompe. D'une manière générale, une des machines est affectée à un essieu entrainé mécaniquement, tandis que l'autre est affectée à un essieu porteur

La configuration présentée correspond à une « chaine à vélo » (document FR2996176), c'est-à-dire qu'en utilisation principale la première machine M1 fait office de pompe pour la deuxième machine M2 qui fait office de moteur.

Le véhicule comprend généralement un moteur thermique (non représenté sur les figures) qui entraine directement ou indirectement la première machine hydraulique M1 par une liaison mécanique. La deuxième machine M2 est reliée aux roues porteuses du véhicule. De cette manière, en cas de patinage des roues entrainées mécaniquement, la machine M1 peut transférer du couple vers les roues porteuses reliées à la machine M2. Il peut y avoir plusieurs machines M1 ou M2 sur plusieurs essieux.

A cette fin, le refoulement de la première machine M1 est relié à l'admission de la deuxième machine M2 par une ligne 11 dite haute pression et le refoulement de la deuxième machine M2 est relié à l'admission de la première machine M1 par une ligne 12 dite basse pression.

Les termes de haute et basse pression correspondent à une utilisation en marche avant avec apport de couple (« utilisation principale »).

Par conséquent, comme les pressions peuvent s'inverser, les termes de première ligne 11 et de deuxième ligne 12 seront préférés.

La première et la deuxième ligne 11, 12 fonctionnent en circuit fermé et peuvent être sujettes à des surpressions pouvant endommager les machines M1, M2 ou les joints présents sur le circuit. Elles définissent une boucle fermée.

A titre d'exemple, les pressions sont de l'ordre de 400 bars dans une ligne et de quelques dizaines de bars dans l'autre ligne, à tout le moins une pression de gavage.

Pour protéger le circuit hydraulique et notamment les première et deuxième lignes 11, 12, il est connu de disposer deux limiteurs de pression.

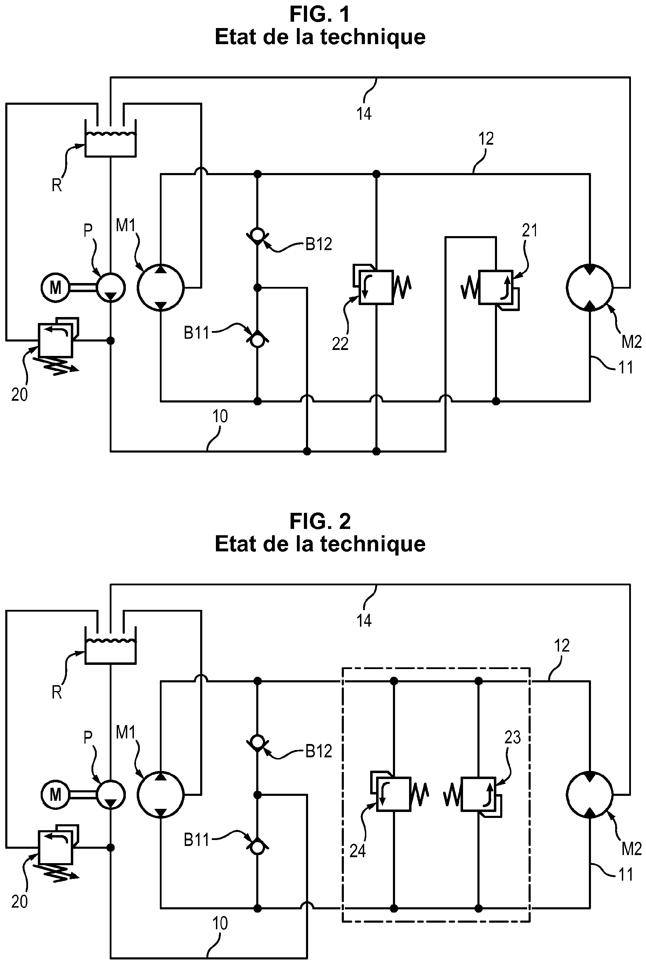

La **figure 1** représente une première variante de l'état de l'art : un limiteur de pression 21 est disposé entre la première ligne 11 et une ligne de gavage 10, un autre limiteur 22 est disposé entre la deuxième ligne 12 et la ligne de gavage 10.

Chaque limiteur 21, 22 peut être taré à la valeur souhaitée. La ligne de gavage 10 est une ligne permettant à une pompe de gavage P, actionnée par un moteur M, typiquement un moteur électrique, ce qui crée un groupe électropompe, d'alimenter en huile les première et deuxième lignes 11, 12 via des clapets anti-retour B11, B12, afin d'enclencher l'assistance hydraulique. Du fait d'un limiteur de pression 20 en parallèle de la pompe P, le circuit de gavage 10 permet l'évacuation de surpression.

Cette solution utilise deux organes de protection (les limiteurs de pression 21, 22).

La **figure 2** représente une deuxième variante de l'état de l'art : on a toujours deux limiteurs 23, 24 disposés comme précédemment sauf que chacun déverse la surpression dans l'autre ligne parmi les première et deuxième lignes 11, 12. Une ligne étant toujours en pression moindre, elle pourra supporter la surpression présente dans l'autre.

Cette solution utilise elle aussi deux organes de protection (les limiteurs de pression 23, 24). On retrouve également sur la figure 2 deux clapets anti-retour B11, B12 qui servent au gavage.

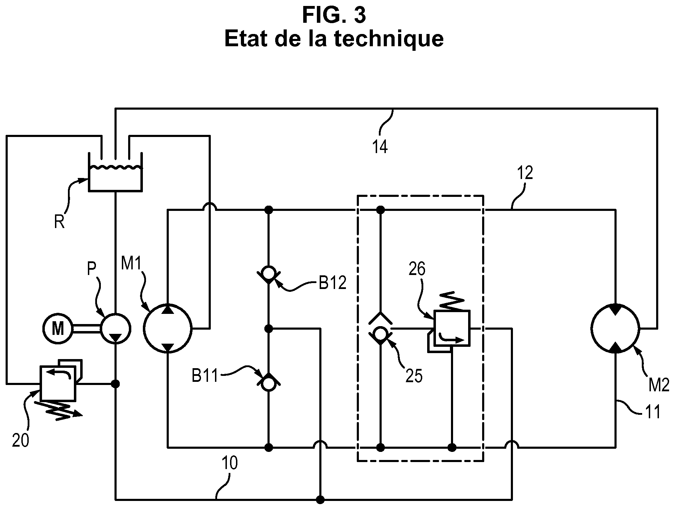

La **figure 3** représente une troisième variante de l'état de l'art : un sélecteur haute-pression 25 sélectionne la ligne de plus haute pression entre la première et la deuxième ligne 11, 12 et l'envoie vers la ligne de gavage 10 *via* un limiteur de pression 26. De cette façon, on supprime un limiteur mais il faut ajouter un sélecteur de circuit 25.

Cette solution utilise elle aussi deux organes de protection. On retrouve également sur la figure 3 deux clapets anti-retour B11, B12 qui servent au gavage.

On a décrit également dans le document US 2005/0097887 une autre variante de dispositif de limitation de pression comprenant un sélecteur de pression en forme de cage associé à deux clapets de surpression. En fonctionnement normal, le sélecteur de pression autorise une liaison entre une ligne de gavage et une ligne d'alimentation basse pression. En cas de surpression sur une ligne, le clapet de surpression associé s'ouvre et autorise une évacuation de la surpression vers la ligne de gavage.

Les dispositifs précédemment décrits ont déjà rendu de grands services.

Néanmoins, ils ne donnent pas toujours satisfaction.

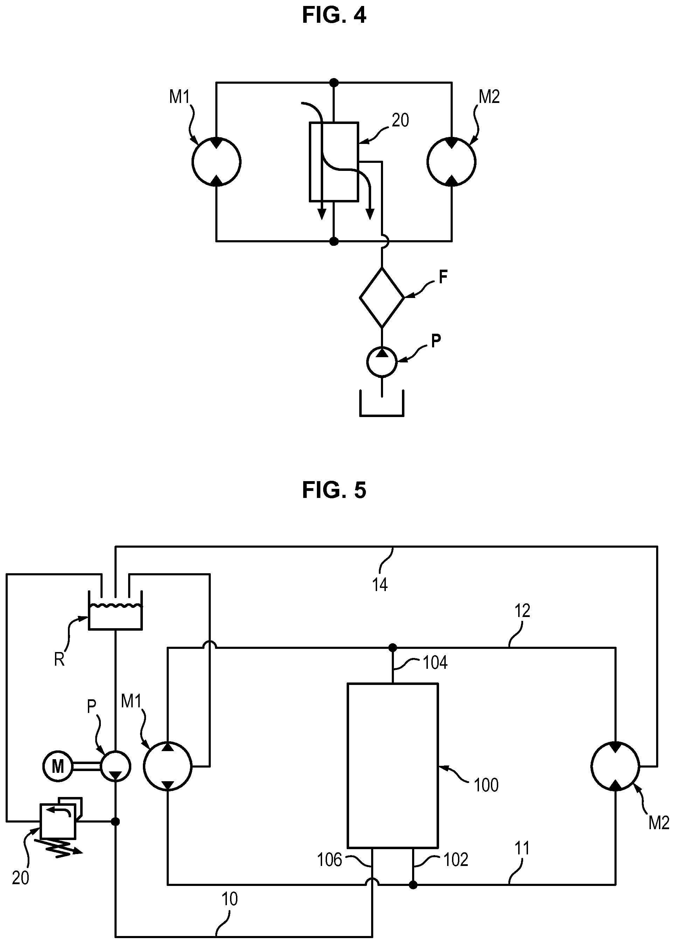

Comme on l'a schématisé sur la figure 4, en cas de patinage d'une roue associée à l'un des moteurs, l'on peut assister à une montée en pression de la ligne théoriquement en basse pression, par ouverture d'un clapet de surpression associé 20 qui court-circuite le moteur concerné, avec possibilité de montée en pression sur les deux lignes 11, 12, ainsi que le cas échéant sur la ligne de gavage 10, et de là risque de détérioration de la pompe de gavage P, voir d'un filtre F associé. Ce risque existe également dans le cas d'une installation comprenant deux machines M1, M2 associées respectivement à deux essieux comme on le voit sur la figure 4.

Le document FR2130805A divulgue un dispositif de réalimentation et de décharge des circuits hydrauliques d'une transmission hydrostatique comprenant deux clapets de décharge et deux clapets de réalimentation.

Dans ce contexte, l'invention a pour objectif de proposer un nouveau dispositif limiteur de pression qui permet d'améliorer le contrôle en pression, tout en permettant un effet de sélection de la ligne à raccorder au dispositif de gavage.

La présente invention a également pour objet de proposer un dispositif limiteur de pression qui optimise l'espace disponible et diminue les coûts de fabrication, avec des organes simples.

### PRESENTATION DE L'INVENTION

Pour cela, l'invention propose un dispositif tel que défini en revendication 1 annexée.

Comme on le comprendra par la suite, l'utilisation d'un sélecteur comprenant une cage sur les extrémités de laquelle sont formés les obturateurs respectifs de deux clapets de sélection, permet de garantir une distance constante entre ces deux obturateurs et par conséquent permet de garantir que lorsque l'un des clapets de sélection est fermé, l'autre clapet de sélection est automatiquement ouvert.

Selon une caractéristique avantageuse de l'invention, le dispositif comprend des moyens de réglage respectivement de chaque clapet de surpression disposés sur l'extérieur des extrémités axiales du sélecteur de pression en forme de cage pour permettre un réglage de manière indépendante du tarage de chaque clapet de surpression.

La limitation de pression se fait dorénavant à l'aide d'un seul dispositif, ce qui améliore la compacité du système ainsi que son coût de fabrication, par rapport à certaines solutions connues de l'état de la technique.

L'invention concerne également les systèmes d'assistance et les véhicules équipés d'un dispositif de limitation de pression conforme à l'invention.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1 à 3 représentent des variantes de l'art antérieur,
- La figure 4 représente schématiquement le risque de montée en pression sur une ligne basse pression en cas de patinage d'une roue associée à un moteur,
- La figure 5 représente schématiquement un circuit d'assistance intégrant un dispositif de limitation de pression 100 conforme à l'invention qui intègre des moyens qui remplissent la fonction d'un sélecteur de pression et de deux limiteurs 21 et 22 ou 23, 24 ou 25, 26 représentés sur les figures 1 à 3,
- La figure 6 représente schématiquement la structure d'un dispositif conforme à l'invention, et
- Les figures 7, 8, 9 et 10 représentent le même dispositif dans quatre états de fonctionnement.

### DESCRIPTION DETAILLEE

La figure 5 représente un système conforme à l'invention intégrant un dispositif de limitation de pression 100 conforme à l'invention qui intègre des moyens qui remplissent la fonction d'un sélecteur de pression et deux limiteurs de pression.

Le dispositif 100 comprend trois ports 102, 104, 106 : deux ports 102, 104 qui communiquent respectivement avec les lignes 11 et 12 et un port 106 qui communique avec la ligne de gavage 10.

La ligne de gavage peut être alimentée en huile par la pompe de gavage P jusqu'à atteindre la pression de gavage, qui rend les machines M1 M2 opérationnelles, ou bien la ligne de gavage peut être aspirée par la pompe de gavage, ce qui rend les machines M1 M2 non opérationnelles. Les machines M1 et M2 sont d'un type qui devient non opérationnel ou débrayable, en dessous d'une seuil de pression dans les lignes 11 et 12. Le sélecteur raccorde automatiquement la ligne à plus basse pression au gavage, ce qui permet une mise en fonction, ou une mise hors fonction de la transmission, qui sont souples et ordonnées

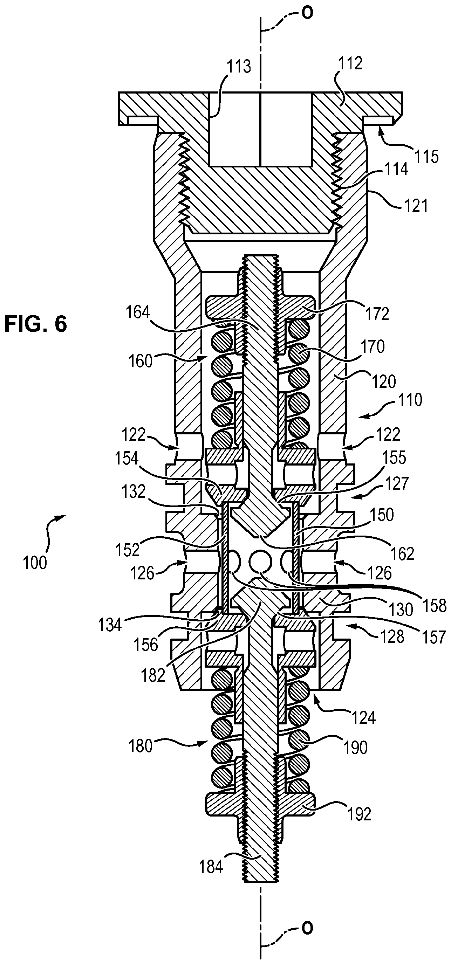

Le dispositif de limitation de pression 100 représenté sur la figure 6 comprend essentiellement un corps 110, un sélecteur en forme de cage 150 et deux clapets de surpression 160, 180.

Le dispositif 100 est centré sur un axe longitudinal de symétrie O-O. Le dispositif 100 est globalement symétrique de révolution autour de l'axe O-O.

Le corps 110 est formé d'une cartouche adaptée pour être intégrée dans toute structure support, par exemple sur le carter d'un moteur hydraulique.

Le corps 110 est formé de préférence par assemblage d'un carter 120 et d'un bouchon 112. Le bouchon 112 peut être fixé sur une extrémité axiale du carter 120 par tout moyen approprié, par exemple par sertissage ou de préférence par vissage au niveau de filetages complémentaires 114. Le bouchon 112 peut être équipé d'une forme 113 non cylindrique de révolution permettant son serrage, ainsi que d'une gorge 115 adaptée pour recevoir un joint d'étanchéité en contact avec la structure support. L'extrémité axiale du carter 120 peut être munie sur sa surface extérieure d'un filetage 121 permettant l'assemblage du dispositif 100 sur cette structure support.

Le carter 120 comprend au moins trois passages traversants 122, 124, 126 qui correspondent aux trois ports 102, 104, 106 précités.

L'un des passages traversant 126 est formé en partie médiane sur la longueur du carter 120 et correspond au port 106. Plus précisément, de préférence, il est prévu plusieurs orifices 126 équi-répartis autour de l'axe O-O formant le port 106.

Les passages 122 et 124 sont formés respectivement de part et d'autre du passage médian 126. Plus précisément de préférence, le passage 122 est formé de plusieurs orifices 122 équi-répartis autour de l'axe O-O formant le port 102.

Le passage 124 peut également être formé de plusieurs orifices équi-répartis autour de l'axe O-O formant le port 104. Cependant, selon le mode de réalisation préférentiel, pour des raisons de fabrication et d'assemblage, le passage 124 est formé d'un orifice qui débouche axialement sur le carter 120 à l'extrémité opposée au bouchon 112.

Le carter 120 comprend de préférence sur sa surface extérieure deux gorges annulaires 127, 128 destinées à recevoir des joints respectifs en contact avec la structure support permettant d'isoler entre elles les liaisons hydrauliques assurées vers les passages 122, 126 et 124.

Le carter 120 comprend sur sa surface interne et au niveau du passage médian 126 un rétrécissement 130 qui s'étend axialement de part et d'autre du passage 126. Le rétrécissement 130 définit respectivement sur ses deux extrémités axiales deux sièges 132, 134 associées au sélecteur 150.

Le rétrécissement 130 qui forme les deux sièges 132, 134 peut être venu de matière sur la surface interne du carter 120 ou être formé d'une pièce séparée rapportée sur la surface du carter 120 et fixée par tout moyen approprié, par exemple par sertissage.

Les deux sièges 132, 134 sont orientés respectivement vers les extrémités axiales du carter 120.

Le sélecteur 150 a la forme générale d'un diabolo formé d'un cylindre central 152 de section transversale cylindrique de révolution constante pourvu sur ses deux extrémités axiales d'excroissances respectives 154, 156 en saillie sur sa surface externe.

Les saillies 154, 156 forment respectivement deux obturateurs annulaires, dirigés respectivement vers la partie médiane du diabolo 150, adaptés pour coopérer avec les sièges 132, 134 formés sur le carter 120.

Le diamètre extérieur du cylindre central 152 est inférieur au diamètre interne du rétrécissement 130. Le diamètre extérieur des obturateurs 154, 156 en revanche est supérieur au diamètre des sièges 132, 134.

Ainsi, lorsque l'un des obturateurs 154, 156 repose sur le siège associé 132, 134, le clapet correspondant du sélecteur 150 est fermé. Inversement, lorsque un obturateur 154, 156 est séparé du siège associé 132, 134, le clapet correspondant du sélecteur 150 est ouvert.

L'utilisation d'un sélecteur 150 comprenant une cage 152 sur les extrémités de laquelle sont formés les obturateurs respectifs 154, 156 de deux clapets de sélection, permet de garantir une distance constante entre ces deux obturateurs 154, 156 et par conséquent permet de garantir que lorsque l'un des clapets de sélection est fermé, l'autre clapet de sélection est automatiquement ouvert.

Le cylindre 152 définit un passage axial traversant destiné à recevoir à coulissement des obturateurs 162, 182 et leurs tiges supports associées 164, 184 des clapets de surpression 160, 180. Le cylindre 152 comprend également une pluralité d'orifices traversant radialement 158.

Les orifices 158 permettent un libre remplissage du volume interne du sélecteur 152 et l'évacuation du fluide lors de l'ouverture d'un clapet de surpression, comme on le verra par la suite.

Les excroissances précitées 154, 156 font également saillie sur la surface interne du cylindre 152 pour définir deux sièges annulaires 155, 157 dirigés axialement vers la partie médiane du sélecteur 150 et destinés à coopérer respectivement avec les obturateurs 162, 182.

Les obturateurs 162, 182 sont formés d'excroissances sur une extrémité des tiges 164, 184. Les obturateurs sont placés sur l'intérieur des sièges 155, 157 dans le volume de la chambre interne du cylindre 152.

Les tiges 164, 184 émergent axialement sur chaque extrémité du sélecteur 150. Chaque tige 164, 184 et son obturateur associé 162, 182 est sollicité vers une extrémité axiale respective du carter 120 par un ressort respectif 170, 190.

Ainsi, les obturateurs 162, 182 sont sollicités respectivement en appui contre les sièges 155, 157.

Les ressorts 170, 190 sont intercalés sur les tiges 164, 184, entre les excroissances 154, 156 et des butées 172, 192 en forme de bagues portées par les tiges 164, 184.

De préférence, les butées 172, 192 sont réglables en position sur la longueur des tiges 164, 184 pour définir l'effort exercé par chaque ressort 170, 190 et par conséquent le tarage de la pression d'ouverture de chaque clapet de surpression.

Les butées 172, 192 peuvent être fixées en position sur leur tige respective 164, 184 par tout moyen approprié, par exemple par vissage ou sertissage.

Les excroissances 154, 157 et le cylindre 152 sont avantageusement formés d'au moins deux pièces, de préférence de trois pièces, initialement séparées et assemblées par tout moyen approprié, par exemple par vissage ou sertissage.

Pour assembler le dispositif de limitation de pression précédemment décrit, on procède essentiellement comme suit.

Dans un premier temps, l'on assemble les obturateurs 162, 182 et leurs tiges 164, 184 équipés des ressorts 170, 190 et des butées 172, 192 sur les excroissances respectives 154, 156. Les butées 172, 192 sont réglées en position pour le tarage recherché.

Les sous-ensembles de clapet de surpression ainsi formés sont introduits dans le carter 120, respectivement par chaque extrémité de celui-ci, et les excroissances 154, 156 sont fixées sur le cylindre 152 du sélecteur.

A cette fin, la surface extérieure du cylindre de sélecteur peut être munie de formes de préhension accessibles par les passages 126 pour faciliter l'assemblage.

Puis, le bouchon 112 est fixé sur l'extrémité du carter 120. Les joints d'étanchéité sont placés dans leurs gorges respectives.

Le fonctionnement du dispositif de limitation est essentiellement le suivant :
Au repos, en absence de pression sur le port 106 et donc dans la ligne de gavage 10 et par conséquent sur les ports 102, 104 et donc dans les lignes d'alimentation 11, 12, le sélecteur 150 est susceptible de libre déplacement dans le carter 120 en regard des sièges 132, 134. Les obturateurs 162, 182 sollicités par les ressorts 170, 190 reposent sur leurs sièges respectifs 155, 157 et les clapets de surpression sont par conséquent fermés.

En fonctionnement, lors de l'activation de la pompe de gavage P et d'un choix de sens de rotation de la machine M1 l'un des ports 102, 104 est soumis à une haute pression tandis que l'autre port 104, 102 est soumis à une basse pression de retour.

Le sélecteur 150 est ainsi sollicité par la haute pression.

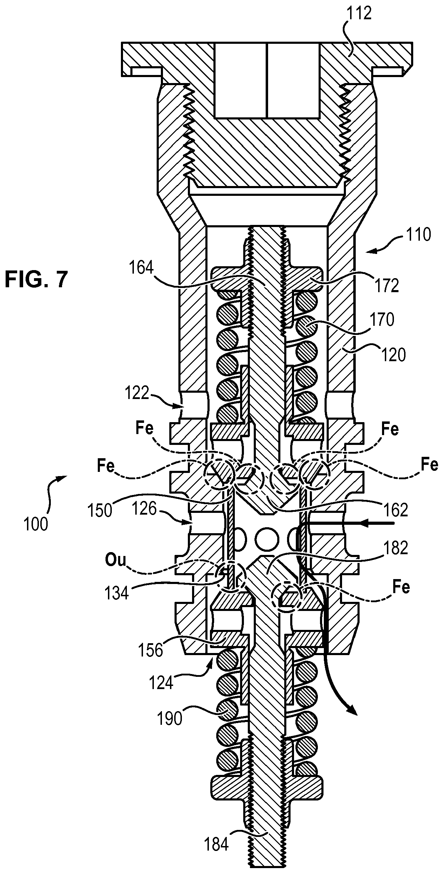

Si comme illustré sur la figure 7, la haute pression est appliquée au port 102 correspondant au passage 122. L'excroissance 154 du sélecteur 150 est sollicitée en contact contre le siège 132. Le clapet de sélection correspondant est fermé. Inversement, une basse pression est appliquée au port 104 correspondant au passage 124. L'excroissance 156 du sélecteur 150 est séparée du siège 134. Le clapet de sélection correspondant est ouvert.

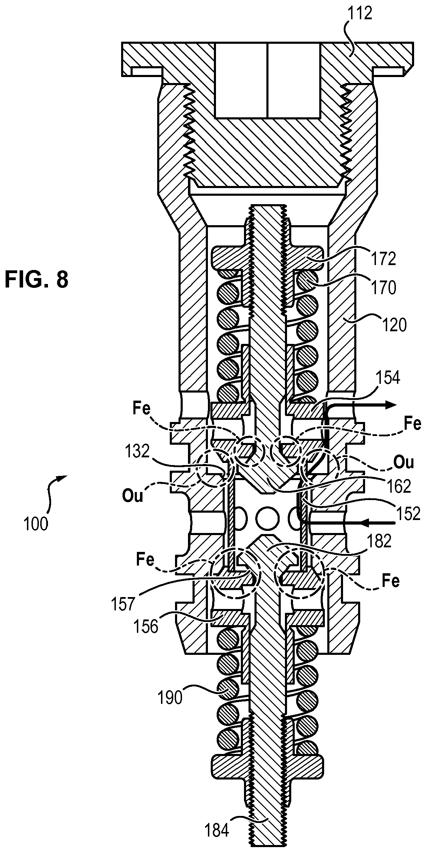

Comme on le voit sur la figure 8, en cas d'inversion du sens de rotation, la haute pression est appliquée au port 104 correspondant au passage 124. L'excroissance 156 du sélecteur 150 est sollicitée en contact contre le siège 134. Le clapet de sélection correspondant est fermé. Inversement, une basse pression est appliquée au port 102 correspondant au passage 122. L'excroissance 154 du sélecteur 150 est séparée du siège 132. Le clapet de sélection correspondant est ouvert.

Le fonctionnement du sélecteur est identique au moment de la mise en service ou de la mise hors service des machines hydrauliques, par l'utilisation de la pompe de gavage, dans le sens de faire entrer de l'huile dans la boucle fermée, ou de faire sortir de l'huile de la boucle fermée.

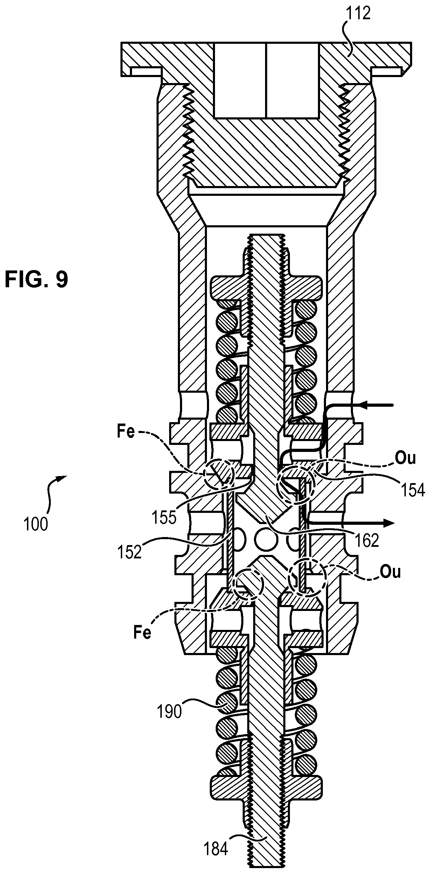

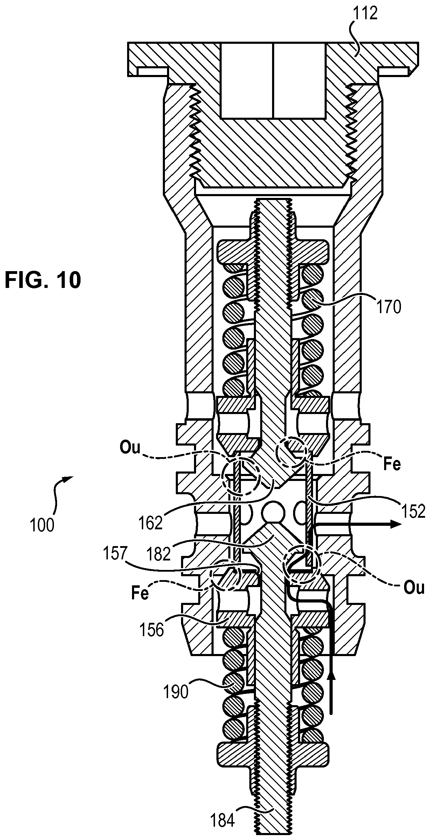

Lorsque la pression dans une ligne 11, 12 dépasse le seuil de tarage des clapets de surpression définis par les ressorts 170, 190, cette surpression appliquée aux obturateurs 162, 182 assurent respectivement l'ouverture des clapets de surpression, comme illustré sur les figures 9 et 10 par la séparation des obturateurs 162, 182 vis-à-vis de leurs sièges 155, 157. La surpression correspondante est alors évacuée vers la ligne de gavage 10 ainsi que vers l'autre ligne d'alimentation.

Sur les figures 7 à 10 les clapets fermés sont répertoriés Fe tandis que les clapets ouverts sont répertoriés Ou.

L'on observera que la distance qui sépare au repos les extrémités en regard des deux obturateurs 162, 182 doit être suffisante pour permettre un déplacement suffisant de cet obturateur pour assurer une ouverture du clapet de surpression correspondant propre à ne pas créer de pertes de charge notables.

De préférence cette distance est suffisante pour permettre en cas de surpression simultanée sur les deux lignes 11 et 12, une ouverture simultanée des deux clapets de surpression.

De cette manière, il est possible de protéger les deux lignes 11 et 12 vis-à-vis de la surpression, dans le cas où le système a été en traction a fort couple, et donc à pression élevée. Dans ce cas, en cas de patinage des deux essieux, par décompression, une des lignes 11,12 pourrait se décomprimer dans l'autre des lignes 11, 12. les deux lignes seraient en surpression, ce qui endommagerait la pompe de gavage. Pour ce cas particulier, il est nécessaire que les deux clapets e surpression puissent s'ouvrir de manière simultanée.

L'homme de l'art comprendra que la réalisation conforme à l'invention permet d'intégrer l'ensemble des fonctions dans un composant en forme de cartouche tout en permettant un réglage simple et fiable, ainsi que de manière indépendante, du tarage de chaque clapet de surpression.

L'invention peut ainsi être intégrée ou juxtaposée à l'une des machines M1 M2.

## Revendications

1. Dispositif de limitation de pression adapté pour être installé dans un système comprenant une première ligne (11) et une deuxième ligne (12) pouvant comprendre de l'huile sous pression et comprenant une ligne d'évacuation et/ou gavage (10), lequel dispositif comprend un sélecteur de pression (130, 150) en forme de cage définissant deux sièges (132, 134) et deux clapets de surpression (160, 180), **caractérisé en ce que** le dispositif comprend un corps (110) comportant un carter (120) qui possède un rétrécissement (130) formant deux sièges (132, 134) de sélecteur (150) de part et d'autre d'un passage (126) destiné à être raccordé à la ligne d'évacuation et/ou gavage (10), que le sélecteur (150) comprend une cage constituée d'un diabolo formé d'un cylindre central (152) mobile dans sa fonction de sélecteur, en regard du rétrécissement formé sur le carter et pourvu sur ses deux extrémités axiales d'excroissances respectives (154, 156) en saillie sur sa surface interne pour définir des sièges (155, 157) de clapets de surpression (160, 180) et sur sa surface externe pour définir des obturateurs de sélecteur, en regard des sièges de sélecteur formé par le rétrécissement du boîtier, que chaque clapet de surpression (160, 180) comprend un obturateur (162, 182) formé d'une excroissance sur une extrémité d'une tige (164, 184) en regard d'un siège de clapet de surpression formé sur les excroissances de la cage de sélecteur, les tiges (164, 184) émergeant axialement sur chaque extrémité du sélecteur (152) et chaque tige (164, 184) et son obturateur associé (162, 182) étant sollicité vers une extrémité axiale respective du dispositif par un ressort respectif (170, 190) intercalé sur une tige (164, 184), entre une excroissance (154, 156) formant obturateur et une butée (172, 192) portée par les tiges (164, 184) et que le dispositif comprend en outre au moins un moyen de réglage (170, 172; 190, 192) d'un clapet de surpression, disposé sur l'extérieur d'une extrémité axiale du sélecteur de pression (150) en forme de cage pour permettre un réglage du tarage du clapet de surpression associé.

2. Dispositif selon la revendication 1, **caractérisé en ce qu'**il comprend des moyens de réglage (170, 172 ; 190, 192) respectivement de chaque clapet de surpression (160, 180) disposés sur l'extérieur des extrémités axiales du sélecteur de pression (150) en forme de cage pour permettre un réglage de manière indépendante du tarage de chaque clapet de surpression (160, 180).

3. Dispositif selon l'une des revendications 1 ou 2, **caractérisé en ce que** chaque butée (172, 192) est réglable en position sur la longueur de la tige associée (164, 184) pour définir l'effort exercé par chaque ressort 170, 190 et par conséquent le tarage de la pression d'ouverture de chaque clapet de surpression.

4. Dispositif selon l'une des revendications 1 à 3, **caractérisé en ce que** chaque butée (172, 192) est fixée en position sur sa tige respective (164, 184) par vissage ou sertissage.

5. Dispositif selon l'une des revendications 1 à 4, caractérisé en ce quele cylindre (152) et les excroissances (154, 156) de la cage formant sélecteur sont formées d'au moins deux pièces initialement séparées et assemblées entre elles.

6. Dispositif selon la revendication 5, **caractérisé en ce que** le cylindre central (152) du sélecteur (150) comprend au moins un passage radial traversant (158).

7. Dispositif selon l'une des revendications 1 à 6, **caractérisé en ce que** le rétrécissement (130) est venu de matière sur la surface interne du carter (120).

8. Système d'assistance à l'entraînement pour véhicule **caractérisé en ce qu'**il comprend un dispositif conforme à l'une des revendications 1 à 7.

9. Véhicule équipé d'un dispositif de limitation de pression conforme à l'une des revendications 1 à 7.

## Patentansprüche

1. Druckbegrenzungsvorrichtung, die ausgeführt ist, um in einem System installiert zu werden, eine erste Leitung (11) und eine zweite Leitung (12) umfassend, die unter Druck stehendes Öl umfassen kann, und eine Austrags- und/ oder Zuführleitung (10) umfassend, wobei die Vorrichtung einen Druckselektor (130, 150) in Form eines Käfigs umfasst, der zwei Sitze (132, 134) und zwei Überdruckklappen (160, 180) definiert, **dadurch gekennzeichnet, dass** die Vorrichtung einen Körper (110) umfasst, der ein Gehäuse (120) beinhaltet, das eine Verengung (130) besitzt, die zwei Sitze (132, 134) eines Selektors (150) beiderseits eines Durchlasses (126) bildet, der dazu bestimmt ist, an die Austrags- und/ oder Zuführleitung (10) angeschlossen zu werden, dass der Selektor (150) einen Käfig umfasst, der aus einem Diabolo konstituiert ist, der aus einem in seiner Funktion als Selektor beweglichen mittigen Zylinder (152) gebildet wird, auf Höhe der Verengung, die auf dem Gehäuse gebildet wird, und an seinen beiden axialen Enden mit jeweiligen Ausstülpungen (154, 156), auf seiner Innenoberfläche überstehend, versehen ist, um Sitze (155, 157) von Überdruckklappen (160, 180) zu definieren, und auf seiner Außenoberfläche, um Selektorverschlüsse zu definieren, auf Höhe der Sitze eines Selektors, der durch die Verengung des Kastens gebildet wird, dass jede Überdruckklappe (160, 180) einen Verschluss (162, 182) umfasst, der aus einer Ausstülpung an einem Ende einer Stange (164, 184) auf Höhe eines Überdruckklappensitzes gebildet wird, der auf den Ausstülpungen des Selektorkäfigs gebildet wird, wobei die Stangen (164, 184) axial an jedem Ende des Selektors (152) hervortreten, und jede Stange (164, 184) und deren zugewiesener Verschluss (162, 182) durch eine jeweilige Feder (170, 190), die auf einer Stange (164, 184) eingesetzt ist, zu einem jeweiligen axialen Ende der Vorrichtung zwischen einer Ausstülpung (154, 156), die einen Verschluss und einen Anschlag (172, 192) bildet, der durch die Stangen (164, 184) getragen wird, angetrieben wird, und dass die Vorrichtung weiter mindestens ein Einstellmittel (170, 172; 190, 192) einer Überdruckklappe umfasst, das an der Außenseite eines axialen Endes des Druckselektors (150) in Form eines Käfigs angeordnet ist, um eine Einstellung der Tarierung der zugewiesenen Überdruckklappe zu ermöglichen.

2. Vorrichtung nach Anspruch 1, **dadurch gekennzeichnet, dass** sie Einstellmittel (170, 172; 190, 192) jeweils jeder Überdruckklappe (160, 180) umfasst, die an der Außenseite der axialen Enden des Drucksleektors (150) in Form eines Käfigs angeordnet sind, um eine unabhängige Einstellung der Tarierung jeder Überdruckklappe (160, 180) zu ermöglichen.

3. Vorrichtung nach einem der Ansprüche 1 oder 2, **dadurch gekennzeichnet, dass** jeder Anschlag (172, 192) in Position über die Länge der zugewiesenen Stange (164, 184) einstellbar ist, um die durch jede Feder 170, 190 ausgeübte Kraft, und folglich die Tarierung des Öffnungsdrucks jeder Überdruckklappe zu definieren.

4. Vorrichtung nach einem der Ansprüche 1 bis 3, **dadurch gekennzeichnet, dass** jeder Anschlag (172, 192) in Position auf seiner jeweiligen Stange (164, 184) durch Verschrauben oder Crimpen befestigt ist.

5. Vorrichtung nach einem der Ansprüche 1 bis 4, **dadurch gekennzeichnet, dass** der Zylinder (152) und die Ausstülpungen (154, 156) des Käfigs, die den Selektor bilden, aus mindestens zwei ursprünglich getrennten und miteinander zusammengesetzten Teilen gebildet werden.

6. Vorrichtung nach Anspruch 5, **dadurch gekennzeichnet, dass** der mittige Zylinder (152) des Selektors (150) mindestens einen durchgehenden radialen Durchlass (158) umfasst.

7. Vorrichtung nach einem der Ansprüche 1 bis 6, **dadurch gekennzeichnet, dass** die Verengung (130) aus einem Material auf der Innenoberfläche des Gehäuses (120) hergestellt ist.

8. Assistenzsystem des Antriebs für ein Fahrzeug, **dadurch gekennzeichnet, dass** es eine Vorrichtung nach einem der Ansprüche 1 bis 7 umfasst.

9. Fahrzeug, das mit einer Druckbegrenzungsvorrichtung nach einem der Ansprüche 1 bis 7 ausgerüstet ist.

## Claims

1. Pressure-limiting device designed to be installed in a system comprising a first line (11) and a second line (12) that can comprise pressurised oil and comprising a discharge and/or booster line (10), said device comprises a pressure selector (130, 150) in the form of a cage defining two seats (132, 134) and two pressure relief valves (160, 180), **characterised in that** the device comprises a body (110) comprising a casing (120) that has a narrowing (130) forming two seats (132, 134) of selector (150) on either side of a passage (126) designed to be connected to the discharge and/or booster line (10), **in that** the selector (150) comprises a cage formed from a diabolo formed from a central cylinder (152) mobile in the selector function thereof, with regards to the narrowing formed on the casing and provided on the two axial ends thereof (154, 156) with respective protusions protruding onto the inner surface thereof in order to define seats (155, 157) of pressure relief valves (160, 180) and on the outer surface thereof in order to define selector shutters, facing selector seats formed by the narrowing of the housing, **in that** each pressure relief valve (160, 180) comprises a shutter (162, 182) formed from a protrusion on the end of a rod (164, 184) facing a pressure relief valve seat formed on the protrusions of the selector cage, with the rods (164, 184) axially emerging on each end of the selector (152) and each rod (164, 184) and the associated shutter thereof (162, 182) being urged towards a respective axial end of the device by a respective spring (170, 190) inserted on a rod (164, 184), between a protrusion (154, 156) forming a shutter and a stop (172, 192) carried by the rods (164, 184) and **in that** the device further comprises at least one means for regulating (170, 172; 190, 192) a pressure relief valve, disposed on the outside of an axial end of the pressure selector (150) in the form of a cage in order to allow for a regulation of the loading of the associated pressure relief valve.

2. Device according to claim 1, **characterised in that** it comprises means for regulating (170, 172; 190, 192) respectively each pressure relief valve (160, 180) disposed on the outside of the axial ends of the pressure selector (150) in the form of a cage in order to allow for an independent regulation of the loading of each pressure relief valve (160, 180).

3. Device according to one of claims 1 or 2, **characterised in that** each stop (172, 192) can be adjusted in position over the length of the associated rod (164, 184) in order to define the effort exerted by each spring 170, 190 and consequently the loading of the opening pressure of each pressure relief valve.

4. Device according to one of claims 1 to 3, **characterised in that** each stop (172, 192) is fastened in position on the respective rod thereof (164, 184) by screwing or crimping.

5. Device according to one of claims 1 to 4, **characterised in that** the cylinder (152) and the protrusions (154, 156) of the cage forming the selector are formed from at least two parts that are initially separated and assembled together.

6. Device according to claim 5, **characterised in that** the central cylinder (152) of the selector (150) comprises at least one radial transverse passage (158).

7. Device according to one of claims 1 to 6, **characterised in that** the narrowing (130) is from the same material on the inner surface of the casing (120).

8. Assist system for the driving of a vehicle **characterised in that** it comprises a device in accordance with one of claims 1 to 7.

9. Vehicle provided with a pressure-limiting device in accordance with one of claims 1 to 7.
